# EUROPÄISCHE PATENTSCHRIFT

(11) **EP 3 154 700 B1**
(45) Veröffentlichungstag und Bekanntmachung des Hinweises auf die Patenterteilung: **07.08.2019**
(21) Anmeldenummer: 15730704.2
(22) Anmeldetag: 02.06.2015
(51) Int. Cl.: B02C 19/06, C01B 33/021, C04B 35/56

(54) **SILICIUMKEIMPARTIKEL FÜR DIE HERSTELLUNG VON POLYKRISTALLINEM SILICIUMGRANULAT IN EINEM WIRBELSCHICHTREAKTOR**
SILICON SEED PARTICLES FOR THE PRODUCTION OF POLYCRYSTALLINE SILICON GRANULES IN A FLUIDIZED BED REACTOR
PARTICULES GERMES DE SILICIUM POUR FABRIQUER DES GRANULÉS DE SILICIUM POLYCRISTALLIN DANS UN RÉACTEUR À LIT FLUIDISÉ

(30) Priorität: 10.06.2014 DE 102014211037
(43) Veröffentlichungstag der Anmeldung: 19.04.2017
(73) Patentinhaber: Wacker Chemie AG, 81737 München (DE)
(72) Erfinder: FORSTPOINTNER, Gerhard, 84556 Kastl (DE); HAUSWIRTH, Rainer, 84375 Kirchdorf (DE)
(74) Vertreter: Belz, Ferdinand
(86) Internationale Anmeldenummer: PCT/EP2015/062274
(87) Internationale Veröffentlichungsnummer: WO 2015/189072

(56) Entgegenhaltungen:
- EP-A1- 2 599 555
- EP-A2- 0 476 632
- DE-A1-102005 039 118
- US-A- 4 945 073
- US-A- 5 637 815

## Beschreibung

Die Erfindung betrifft Siliciumkeimpartikel für die Herstellung von polykristallinem Siliciumgranulat in einem Wirbelschichtreaktor.

Polykristallines Siliciumgranulat ist eine Alternative zum im Siemens-Verfahren hergestellten Polysilicium. Während das Polysilicium im Siemens-Verfahren als zylindrischer Siliciumstab anfällt, der vor seiner Weiterverarbeitung zeit- und kostenaufwändig zu so genanntem Chippoly zerkleinert und ggf. wiederum gereinigt werden muss, besitzt polykristallines Siliciumgranulat Schüttguteigenschaften und kann direkt als Rohmaterial z.B. zur Einkristallerzeugung für die Photovoltaik- und Elektronikindustrie eingesetzt werden.

Polykristallines Siliciumgranulat wird in einem Wirbelschichtreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine thermochemische Reaktion, wobei sich elementares Silicium an der heißen Partikeloberfläche abscheidet. Die einzelnen Partikel wachsen im Durchmesser an. Durch den regelmäßigen Abzug von angewachsenen Partikeln und Zugabe kleinerer Siliciumkeimpartikel kann das Verfahren kontinuierlich mit allen damit verbundenen Vorteilen betrieben werden. Als siliciumhaltiges Eduktgas sind Silicium-Halogenverbindungen (z.B. Chlorsilane oder Bromsilane), Monosilan (SiH₄), sowie Mischungen dieser Gase mit Wasserstoff beschrieben. Derartige Abscheideverfahren und Vorrichtungen hierzu sind beispielsweise aus US 4786477 A bekannt.

Für die Herstellung von hochreinem polykristallinem Siliciumgranulat werden Siliciumkeimpartikel benötigt.

Zur Herstellung solcher Siliciumkeimpartikel sind Gasstrahlmühlen z. B. aus US 7490785 B2 bekannt.

Solche Vorrichtungen eignen sich zur Herstellung von Siliciumkeimpartikeln einer Größe von 50 µm bis 1000 µm aus einem Siliciumgranulat einer Größe von 300 µm bis 5000 µm und umfassen eine vertikal angeordnete Strahlkammer mit einem zylindrischen Querschnitt mit einer Strahldüse am Boden der Strahlkammer, durch die ein Mahlgasstrom in die Strahlkammer eingebracht werden kann, einen direkt an die Strahlkammer sich anschließenden Gegenstrom-Schwerkraftsichter und einen Einlass für ein Siliciumgranulat, wobei die Strahlkammer eine Länge hat, die für eine Aufweitung des Mahlgastromes auf den Querschnitt der Strahlkammer ausreicht und die Strahlkammer einen kleineren Strömungsquerschnitt hat als der Gegenstrom-Schwerkraftsichter. Das Siliciumgranulat wird dadurch zerkleinert, dass sich aus dem Siliciumgranulat in der Mahlzone eine Wirbelschicht hoher Feststoffkonzentration bildet, einzelne Siliciumpartikel des Siliciumgranulats in der zylindrischen Strahlkammer, in der nur eine geringe Feststoffkonzentration vorliegt, durch einen Mahlgasstrom hoher Geschwindigkeit beschleunigt werden und auf die Wirbelschicht hoher Feststoffkonzentration auftreffen, wobei Siliciumgranulat und Siliciumpartikel zerbrechen. In einer Ausführungsform bestehen die mit Siliciumpartikeln in Berührung kommenden Teile der Vorrichtung aus einer äußeren metallischen Hülle mit einer Innenwand, die mit einer Beschichtung versehen ist. Als Beschichtung werden Silicium in mono- oder polykristalliner Form oder ein Kunststoff eingesetzt.

Es hat sich jedoch gezeigt, dass Strahldüsen mit Beschichtungen aus Silicium oder Kunststoff einem starken Verschleiß, insbesondere am Austrittsbereich der Düse unterliegen.

US 2011/073689 A2 offenbart ein Verfahren zur Erzeugung feiner Partikel mittels einer Strahlmühle, wobei das Mahlgas einen Druck von <= 4 bar (abs) und eine Temperatur von kleiner 100°C aufweist. Ebenso ist ein Verfahren zur Erzeugung feiner Partikel mittels einer Strahlmühle unter Verwendung komprimierter Gase als Mahlgas beschrieben, bei dem das Mahlgas einen Druck von <= 4 bar (abs) und eine Temperatur von kleiner 100 °C aufweist und bei dem während der Vermahlung ein Coatingsmittel bzw. Dotierungsmittel derart zugegeben wird, dass zumindest Teile der Oberfläche der Partikel des Mahlguts mit dem Coatingsmittel bzw. Dotierungsmittel belegt werden.

Sollen Siliciumkeimpartikel mit Partikelgrößen von größer als 1250 µm hergestellt werden, sind die zuvor beschriebenen Strahlmühlen nicht geeignet.
Zur Herstellung von Siliciumkeimpartikeln einer solchen Größe kann jedoch auf Walzenbrecher zurückgegriffen werden. JP 57-067019 A offenbart die Herstellung von Siliciumseedpartikeln durch Zerkleinern von polykristallinem Silicium in einem Walzenbrecher und anschließender Fraktionierung mittels Siebung. Die Walzen sind aus hochreinem Silicium gefertigt.

Dabei kommt es jedoch zu einem hohen Verschleiß der Siliciumschicht auf den Walzen, so dass nur kurze Laufzeiten der Maschine möglich sind, bis die Walzen ausgetauscht werden müssen. Eine wirtschaftliche Herstellung von Siliciumkeimpartikeln ist damit nicht möglich.

US 7549600 B2 offenbart ein Verfahren zur Herstellung von Siliciumfeinbruch durch Zerkleinern in einer Brechanlage, Klassifizierung des Feinbruchs, wobei ein Teil des Brechgutes mit einer Kantenlänge, die kleiner oder gleich ist der maximalen Kantenlänge des erwünschten Siliciumfeinbruchs (Fraktion 1) in einem Auffangbehälter 1 gesammelt wird, und der Teil des Brechgutes mit einer Kantenlänge, die grösser ist als die Kantenlänge des erwünschten Siliciumfeinbruchs (Fraktion 2) ebenfalls gesammelt wird. In einer Ausführungsform wird aus Fraktion 1 ein Teil des Feinbruchs, der eine Kantenlänge hat, die kleiner ist als die minimale Länge des erwünschten Siliciumfeinbruchs, aussortiert und gesammelt (Fraktion 3). Die erhaltenen Fraktionen 1 und 3 können als Impfpartikel zur Abscheidung von polykristallinem Silicium in einem Wirbelschichtverfahren verwendet werden. Die Brechwerkzeuge besitzen eine Oberfläche aus einem Hartmetall (besonders bevorzugt Wolframcarbid in einer Kobaltmatrix) oder aus Silicium.

Hierbei kommt es allerdings zu einer unerwünschten Kontamination der Siliciumkeimpartikel mit B, C, Zn, Ti, Mg, W, Fe, Co, Sb und Zr.

US 5637815 A offenbart eine Düse aus gesintertem SiC zur Verwendung in Wirbelschichtreaktoren, wobei durch die Düse Edukte eingebracht und gemischt bzw. dispergiert werden.

DE 100 520 21 B4 offenbart eine Wasserstrahlschneidhochdruckdüse, bestehend aus gesintertem WC-Pulver. Eine Wasserstrahlschneidemaschine ist eine Werkzeugmaschine zum Trennen von Materialien wie Kunststoffen, Metallen, Leder und Steinen mittels eines Hochdruckwasserstrahles.

Aus der beschriebenen Problematik ergab sich die Aufgabenstellung der Erfindung.

Die Aufgabe der Erfindung wird gelöst durch ein Verfahren gemäß dem Anspruch 1.

Die Erfindung sieht also vor, mittels wenigstens einer Strahldüse aus Hartmetall einen Mahlgasstrom auf polykristallines Siliciumgranulat zu richten und das polykristalline Siliciumgranulat durch Kollisionen untereinander zu vermahlen.

Prallen die durch das Mahlgas beschleunigten Partikel auf Partikel mit geringerer Geschwindigkeit kommt es zu Stoßbeanspruchung und die Partikel zerbrechen je nach Stoßenergie.

Bei der eingesetzten Strahldüse handelt es sich vorzugweise um eine einfach konvergierende Düse oder um eine Lavaldüse. Mittels einer Lavaldüse lassen sich am Düsenaustritt Überschallgasgeschwindigkeiten erzeugen.

Vorzugweise besteht die Strahldüse aus 84,5 bis 93,4% Wolframcarbid, 15 bis 6 % Kobalt und 0,5 bis 0,6 % Metallcarbide, ausgewählt aus der Gruppe bestehend aus Titancarbid, Tantalcarbid, Chromcarbid und Vanadiumcarbid.

Die Korngröße des Wolframcarbids beträgt vorzugweise 0,5-0,8 µm. In einer besonders bevorzugten Ausführungsform beträgt die Korngröße des Wolframcarbids etwa 0,6 µm.

Die Zusammensetzung entspricht den ISO-Codes K05 bis K40.

Die Strahldüse weist eine DLC (Diamond-like Carbon)-Beschichtung auf. Die Schichtdicke der DLC-Beschichtung beträgt vorzugweise 1 bis 10 µm.

Die Dimensionierung des Strahldüsenquerschnitts (Innendurchmesser) erfolgt derart, dass Austrittsgeschwindigkeiten von mehr als 300 m/s, bevorzugt 400 bis 800 m/s, realisiert werden. Die Strahldüse hat vorzugweise einen Innendurchmesser von 3 mm bis 6 mm.

Durch die neuen Strahldüsen können verschiedene Nachteile des Stands der Technik vermieden werden. Bei den zuvor üblicherweise verwendeten Strahldüsen aus Kunststoff oder aus Silicium kommt es zu vorzeitigem Verschleiß durch Auswaschung an der Strahldüsenspitze. Der Verschleiß führt zur Ablenkung des Strahldüsenstrahls, geänderter Gasaustrittsgeschwindigkeit und damit zur verkürzten Standzeit der Strahldüse und der Mahlkammerauskleidung. Eine geänderte Gasaustrittsgeschwindigkeit wirkt sich außerdem negativ auf die Partikelgröße des Mahlguts aus. Des Weiteren findet sich der Materialverschleiß der Strahldüse teilweise auf dem gemahlenen Si-Material wieder und verschlechtert dessen Qualität.

Das zu zerkleinernde polykristalline Siliciumgranulat hat vorzugsweise eine Größe von 300 µm bis 5000 µm. Die erzeugten Siliciumkeimpartikel haben vorzugweise eine Größe von 50 µm bis 1000 µm mit einem massenbezogenen Medianwert von 300 µm bis 500 µm. Die erzeugten Siliciumkeimpartikel weisen vorzugweise folgende Verunreinigungen an der Oberfläche auf: Kohlenstoff weniger als 1 ppmw, Fe weniger als 2 ppbw, Cr weniger als 0,5 ppbw, Ni weniger als 1 ppbw und Wolfram weniger als 0,1 ppbw.

Die Zerkleinerung des polykristallinen Siliciumgranulats kann in-situ in einem Wirbelschichtreaktor erfolgen. Dabei wird ein einzelner Gasstrahl hoher Geschwindigkeit erzeugt, der einen Teil des Si-Granulats in der Wirbelschicht zu Siliciumkeimpartikeln zerkleinert.

Ebenso bevorzugt ist der Einsatz einer Strahlmühle oder Gegenstrahlmühle. Hierfür eignet sich die in US 7490785 B2 beschriebene Vorrichtung. Bezüglich der konkreten Ausgestaltung der Strahlmühle, insbesondere bzgl. des dort beschriebenen Gegenstrom-Schwerkraftsichter wird in vollem Umfang auf US 7490785 B2 Bezug genommen. Abweichend von US 7490785 B2 kommt eine Strahldüse aus Hartmetall, z.B. aus WC, zum Einsatz. Ein weiterer Unterschied besteht in der Ausgestaltung der Strahlkammer.

Vorzugweise weist die Vorrichtung abweichend von US 7490785 B2 nämlich eine vertikal angeordnete Strahlkammer mit einem vieleckigen (polygonen) Querschnitt auf. Besonders bevorzugt weist die Vorrichtung eine vertikal angeordnete Strahlkammer mit einem achteckigen Querschnitt auf.

Vorzugweise umfasst die Strahlkammer einen metallischen Außenmantel, wobei sich zwischen Außenmantel und Siliciumauskleidung eine Detektionsschicht befindet, die dazu geeignet ist, Schäden der Siliciumauskleidung detektierbar zu machen. Zu diesem Zweck umfasst die Detektionsschicht einen am Mahlgut nachweisbaren Stoff. Durch Kontamination des Mahlguts mit dem nachweisbaren Stoff sind Schäden der Auskleidung detektierbar.
Beim Mahlgut handelt es sich vorzugweise um polykristallines Siliciumgranulat. Gut nachweisbar an polykristallinem Silicium sind beispielsweise Kohlenstoff und Metalle. Daher sind Detektionsschichten aus Kunststoff, die Kohlenstoff oder Metalle enthalten, besonders bevorzugt.

Die Strahldüse wird vorzugweise mit Mahlgas hoher Reinheit betrieben. Unter hoher Reinheit werden Verunreinigungen kleiner 5 ppmv verstanden. Beim Mahlgas handelt es sich vorzugweise um Luft, Argon, Helium, Stickstoff oder um Gemische der genannten Gase.

Besonders bevorzugte Strahldüsenform ist die Lavalgeometrie, um Überschallgeschwindigkeit an der Austrittsöffnung der Strahldüse zu erzielen.

Die Außengeometrie der Strahldüse ist vorzugsweise an die Aufnahme in der Strahlkammer angepasst und im produktberührten Bereich strömungsgünstig geformt.

Die Strahldüse kann als Einschraubkörper ähnlich einer Schraube mit unterschiedlichen Köpfen (flach, zylindrisch, Sechskant, Senkkopf) ausgeführt sein.

Die Befestigung kann von innen nach außen oder von außen nach innen erfolgen. Die Strahldüse kann auch als Klemmkörper in eine Vorrichtung der Strahlkammer gespannt werden.

Bei der Auswahl der Strahldüsenform sollte auf eine besonders strömungsgünstige Ausführung im produktberührten Bereich geachtet werden.

Ein Beispiel betrifft auch ein Verfahren zur Herstellung von polykristallinem Siliciumgranulat, umfassend Fluidisierung von mittels des zuvor beschriebenen Verfahrens hergestellten Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases mittels einer thermochemischen Reaktion polykristallines Silicium an den heißen Siliciumkeimpartikeloberflächen abgeschieden wird, wodurch das polykristalline Siliciumgranulat entsteht.

Vorzugweise wird das Verfahren kontinuierlich betrieben, indem durch Abscheidung im Durchmesser angewachsene Partikel aus dem Reaktor abgeführt und frische Siliciumkeimpartikel zudosiert werden.

Beim siliciumhaltigen Reaktionsgas kann es sich um Monosilan handeln. Die Temperatur der Wirbelschicht im Reaktionsbereich beträgt bevorzugt 600-850° C.

Beim siliciumhaltigen Reaktionsgas kann es sich jedoch auch um Trichlorsilan handeln. Die Temperatur der Wirbelschicht im Reaktionsbereich beträgt in diesem Fall bevorzugt 800-1200° C, besonders bevorzugt 900-1050° C, ganz besonders bevorzugt 920-970°C.

Beim Fluidisierungsgas handelt es sich vorzugsweise um Wasserstoff.

Das Reaktionsgas wird über eine oder mehrere Düsen in die Wirbelschicht eingedüst.

Die lokalen Gasgeschwindigkeiten am Austritt der Düsen betragen vorzugsweise 0,5 bis 200 m/s.

Die Konzentration des siliciumhaltigen Reaktionsgases beträgt bezogen auf die gesamte durch die Wirbelschicht strömende Gasmenge vorzugsweise 10 mol-% bis 50 mol-%, besonders bevorzugt 15 mol-% bis 40 mol-%.

Die Konzentration des siliciumhaltigen Reaktionsgases in den Reaktionsgasdüsen beträgt bezogen auf die gesamte durch die Reaktionsgasdüsen strömende Gasmenge vorzugsweise 20 mol-% bis 80 mol-%, besonders bevorzugt 30 mol-% bis 60 mol-%.

Der Reaktordruck bewegt sich im Bereich von 0 bis 7 barü, vorzugsweise im Bereich 0,5 bis 4,5 barü.

Bei einem Reaktor mit einem Durchmesser von z. B. 400 mm beträgt der Massenstrom des siliciumhaltigen Reaktionsgas vorzugsweise 200 bis 600 kg/h. Der Wasserstoffvolumenstrom beträgt vorzugsweise 100 bis 300 Nm³/h. Für größere Reaktoren sind höhere Mengen an siliciumhaltigem Reaktionsgas und H₂ bevorzugt.

Da einige Prozessparameter idealerweise abhängig von der Reaktorgröße ausgewählt werden, sind im Folgenden auf die Reaktorquerschnittsfläche normierte Betriebsdaten dargestellt, in denen das im Rahmen dieser Erfindung beschriebene Verfahren Gültigkeit besitzt.

Der spezifische Massenstrom des siliciumhaltigen Reaktionsgases beträgt vorzugsweise 1600-6500 kg/(h*m²).

Der spezifische Wasserstoffvolumenstrom beträgt vorzugsweise 800-4000 Nm³/(h*m²).

Das spezifische Bettgewicht beträgt vorzugsweise 700-2000 kg/m².

Die spezifische Siliciumkeimpartikeldosierrate beträgt vorzugsweise 7-30 kg/(h*m²).

Die spezifische Reaktorheizleistung beträgt vorzugsweise 800-3000 kW/m².

Die Verweilzeit des Reaktionsgases in der Wirbelschicht beträgt vorzugsweise 0,1 bis 10 s, besonders bevorzugt 0,2 bis 5 s.

### Kurzbeschreibung der Figuren

- **Fig. 1**: zeigt den schematischen Aufbau einer Strahldüse.
- **Fig. 2**: zeigt den vieleckigen Querschnitt einer Strahlkammer
- **Fig. 3**: zeigt zwei Ausführungsformen für Querschnitte einer Strahlkammer.
- **Fig. 4**: zeigt eine Strahlkammer mit eingebauter Strahldüse.

In den nachstehend beschriebenen Ausführungsbeispielen bzw. Ausführungsformen oder Ausführungsvarianten sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

### Liste der verwendeten Bezugszeichen

- **1**: Mahlgas
- **2**: Schaft
- **3**: Strahldüsenkopf
- **4**: Strahldüse
- **5**: Strahlkammer
- **6**: Außenmantel
- **7**: Detektionsschicht
- **8**: Auskleidung

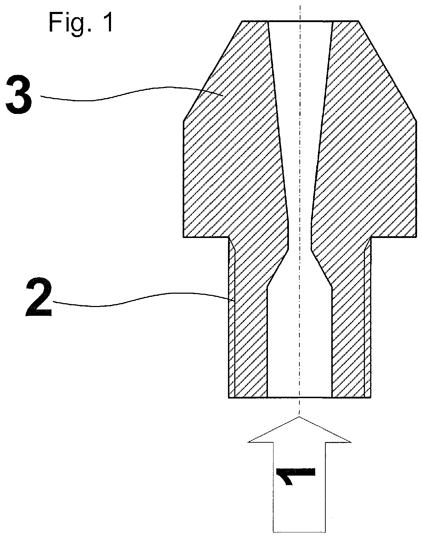

Die Strahldüsengeometrie ist aus **Fig. 1** ersichtlich.

Die äußere Form der Strahldüse erinnert in diesem Beispiel an die Geometrie einer Schraube. Der Schaft **2** dient zur Aufnahme der Strahldüse in der Vorrichtung (z.B. Strahlmühle) und besteht in der Regel aus einem metrischen oder zölligen Gewinde, kann aber auch als Klemm- oder Klickverschluss ausgeführt sein. Der Schaft **2** kommt mit dem Mahlgut nicht in Kontakt. Der Strahldüsenkopf **3** kommt mit dem Produkt in Kontakt. Um einen festen Sitz der Strahldüse in der Vorrichtung zu gewährleisten sind Schlüsselflächen am Strahldüsenkopf angebracht, an denen die Strahldüse mit einem passenden Montagewerkzeug in der Vorrichtung befestigt werden kann. Zur Abdichtung des Strahldüsenkörpers zur Vorrichtung wird entweder im Gewinde gedichtet oder mit einer separaten Dichtung zwischen Strahldüsenkopf und Vorrichtung die Abdichtung erzielt. Der produktberührte Strahldüsenkopf ist zum Ausströmbereich hin strömungsgünstig ausgeführt.

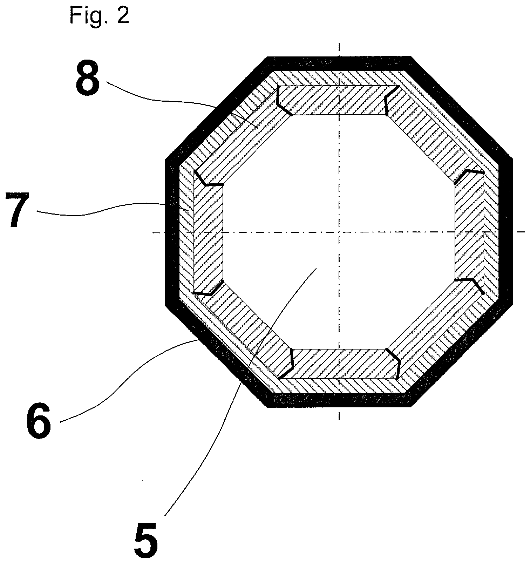

Des Weiteren umfasst die Erfindung eine Strahlkammer mit einer vieleckigen (polygonen) Querschnittsfläche (vgl. **Fig. 2**).

In US 7490785 B2 wird eine Strahlkammer mit zylindrischer Querschnittsfläche beschrieben.

Eine vieleckige Strahlkammer hat gegenüber der zylindrischen Querschnittsfläche den Vorteil, dass die Auskleidung **8** mehrteilig gestaltet werden kann, nämlich z.B. aus einzelnen ebenen Leisten, die in einer bevorzugten Ausführung aus hochreinem Silicium bestehen, zusammengesetzt werden kann.

Dadurch kann im Gegensatz zu einer über den gesamten Umfang einteilig ausgeführten zylindrischen Auskleidung, die nur in begrenzten Durchmessern verfügbar ist, quasi eine beliebig große Querschnittsfläche gebildet werden.

Die Mahlleistung und die Mahlqualität werden durch den polygonen Querschnitt der Strahlkammer **5** grundsätzlich nicht beeinflusst.

Bei einer großen Querschnittsfläche können mehrere Strahldüsen eingebaut werden und damit eine hohe Mahlleistung erzielt werden.

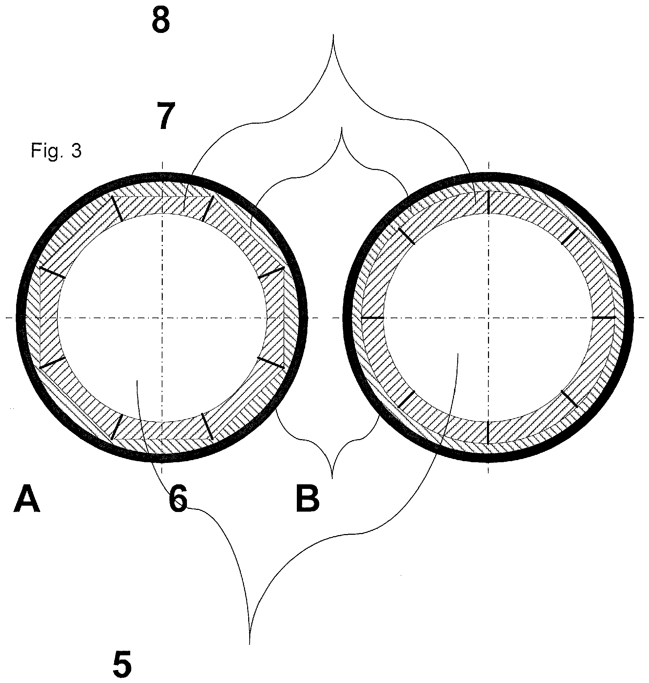

Möglich ist es aber auch, eine zylindrische Strahlkammer **5** vorzusehen und die Auskleidung **8** der Strahlkammer in Segmentbauweise analog zur vieleckigen Strahlkammer **5** auszuführen. Diese bevorzugte Ausführungsform ist in **Fig. 3** **B** dargestellt.

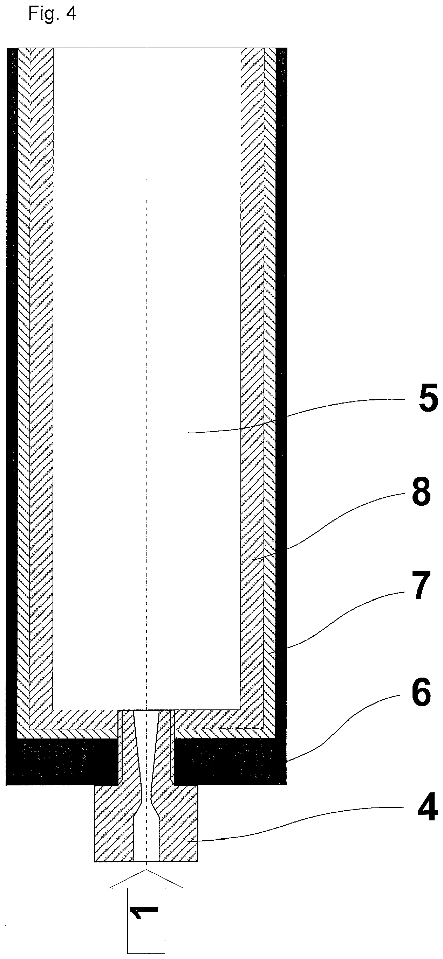

**Fig. 4** zeigt ein Einbaubeispiel einer Strahldüse **4** in eine Strahlkammer **5.**

Der Strahldüsenkopf schließt flächenbündig mit einer hochreinen Auskleidung **8,** die aus mono- oder polykristallinem Silicium besteht, ab.

Der Strahldüsenkörper wird im Boden des metallischen Außenmantels **6** mittels eines Gewindes befestigt.

Zwischen Außenmantel **6** und Auskleidung **8** befindet sich eine kohlenstoffhaltige Detektionsschicht **7,** z.B. aus Polypropylen. Mit einer solchen Detektionsschicht **7** lassen sich Schadstellen in den Auskleidungen **8** über eine leicht detektierbare Kontamination des Mahlguts feststellen. Kohlenstoff lässt sich mit einem Kohlenstoffanalysator in geringen Spuren detektieren. Alternativ kann die Detektionsschicht auch aus Kunststoff enthaltend eine metallische Komponente bestehen. Metalle lassen sich am Mahlgut ebenfalls gut nachweisen.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen, insoweit sie in den Rahmen der Erfindung gemäß der Definition in den beigefügten Ansprüchen fallen, sowie Äquivalente vom Schutz der Ansprüche abgedeckt sein.

### Beispiel und Vergleichsbeispiel

In einer Mahlanlage gemäß US 7490785 B2 wurde eine Strahldüse aus Polyamid **(Vergleichsbeispiel)** durch eine Strahldüse aus Wolframcarbid **(Beispiel)** nach ISO-Code K05-K10 ersetzt.

Die Innenkontur der Strahldüse ist als Lavaldüse mit einem Durchmesser von 4 mm ausgeführt. Die Strahlkammer-Geometrie war bei Beispiel und Vergleichsbeispiel identisch.

**Tabelle 1** zeigt die Verunreinigungen der hergestellten Siliciumkeimpartikel mit Kohlenstoff und Wolfram sowie die Standzeit der Düsen.

Strahldüsen aus Polyamid erreichen eine mittlere Standzeit von nur 15 Tonnen Siliciumkeimpartikeln. Dann muss die Strahldüse aufgrund von Verschleiß und der damit verbundenen schlechter werdenden Mahlcharakteristik erneuert werden.

Mit einer baugleichen Strahldüse aus Wolframcarbid wurde die Mahlanlage mit identischen Parametern (Mahlgasstrom, Dosierrate des Aufgabegutes) betrieben und der Strahldüsenverschleiß und die Produktqualität nach bestimmten Haltepunkten kontrolliert.

**Tabelle 1**

| | **Vergleichsbeispiel** | **Beispiel** |
|---|---|---|
| Strahldüse | Polyamid | WC |
| Verunreinigung mit Kohlenstoff [ppmw] | 1,6 | 0,6 |
| Verunreinigung mit Wolfram [ppbw] | 0,091 | 0,092 |
| Standzeit [Tonnen Siliciumkeimpartikel] | 15 | >200 |

Bei einer Zielproduktmenge von 100 to war kein Verschleiß an der Strahldüse messbar (Gewicht, Maße, REM-Aufnahmen). Die Produktqualität hat sich im Hinblick auf Kohlenstoff verbessert. Strahldüsen aus WC geben also offenbar weniger Kohlenstoff an das Produkt ab als die Strahldüsen aus PA.

Mittels Massenspektrometrie wurden Ausgangsmaterial (polykristallines Siliciumgranulat) und Mahlprodukt (Siliciumkeimpartikel) auch auf metallische Kontamination untersucht.

Die Werte des Mahlproduktes liegen sowohl für Wolfram (vgl. **Tabelle 1**) als auch für Kobalt max. 0,01 ppbw über dem Ausgangsniveau. Gegenüber einer metallfreien Kunststoffdüse ist überraschenderweise kaum ein Unterschied erkennbar.

Die besonderen Vorteile der Erfindung bestehen somit darin, dass kein bzw. nur ein minimaler Verschleiß der Strahldüse aus Hartmetall feststellbar ist. Dadurch bleibt die Strahldüsengeometrie konstant und gewährleistet gleichbleibende Mahlleistung und Mahlqualität. Die Hartmetalldüse zeigt eine nahezu unbegrenzte Standzeit. Zudem ist keine bzw. nur eine minimale Produktkontamination durch den Strahldüsenwerkstoff erkennbar.

## Patentansprüche

1. Verfahren zur Herstellung von Siliciumkeimpartikeln, die zur Herstellung von polykristallinem Siliciumgranulat in einem Wirbelschichtreaktor verwendet werden können, umfassend Einbringen eines Mahlgasstroms (1) in eine Kammer (5) mit polykristallinem Siliciumgranulat, wodurch einzelne Partikel des polykristallinen Siliicumgranulats derart beschleunigt werden, dass sie mit anderen Partikeln des polykristallinen Siliciumgranulats kollidieren und dabei das polykristalline Siliciumgranulat zerkleinert wird, **dadurch gekennzeichnet, dass** der Mahlgasstrom (1) durch wenigstens eine Strahldüse (4) aus Wolframcarbid mit einer Bindermatrix aus Kobalt, optional enthaltend Zusätze von Metallcarbiden, ausgewählt aus der Gruppe bestehend aus Titancarbid, Tantalcarbid, Chromcarbid und Vanadiumcarbid, in die Kammer (5) eingebracht wird, wobei es sich bei der Strahldüse um eine Lavaldüse oder eine Strahldüse, die eine DLC-Beschichtung mit einer Dicke von 1 bis 10 µm aufweist, handelt.

2. Verfahren gemäß Anspruch 1, **dadurch gekennzeichnet, dass** die Strahldüse (4) aus 84,5 bis 93,4% Wolframcarbid, 15 bis 6 % Kobalt und 0,5 bis 0,6 % Metallcarbiden, ausgewählt aus der Gruppe Titancarbid, Tantalcarbid, Chromcarbid und Vanadiumcarbid besteht.

3. Verfahren gemäß Anspruch 1, **dadurch gekennzeichnet, dass** das Wolframcarbid eine Korngröße von 0,5-0,8 µm hat.

4. Verfahren nach einem der Ansprüche 1 bis 3, wobei eine Austrittsgeschwindigkeit des Mahlgasstromes aus der wenigstens einen Strahldüse (4) mehr als 300 m/s, vorzugweise 400 bis 800 m/s beträgt.

5. Verfahren nach einem der Ansprüche 1 bis 4, wobei das zu zerkleinernde polykristalline Siliciumgranulat eine Größe von 300 µm bis 5000 µm aufweist, die hergestellten Siliciumkeimpartikel eine Größe von 50 µm bis 1000 µm aufweisen.

6. Verfahren nach einem der Ansprüche 1 bis 5, wobei die Zerkleinerung des polykristallinen Siliciumgranulats in einem Wirbelschichtreaktor erfolgt, wobei ein einzelner Gasstrahl erzeugt wird, der einen Teil des polykristallinen Siliciumgranulats in der Wirbelschicht zu Siliciumkeimpartikeln zerkleinert.

7. Verfahren nach einem der Ansprüche 1 bis 6, wobei die Zerkleinerung des polykristallinen Siliciumgranulats in einer Strahlmühle oder in einer Gegenstrahlmühle erfolgt.

8. Verfahren nach Anspruch 7, wobei eine vertikal angeordnete Strahlkammer (5) der Strahlmühle oder der Gegenstrahlmühle einen kreisförmigen oder einen polygonen Querschnitt und innen eine mehrteilige Auskleidung (8) mit Siliciumsegmenten aufweist, wobei die wenigstens eine Strahldüse (4) am Boden der Strahlkammer (5) angebracht ist.

## Claims

1. Process for producing silicon seed particles, which can be used for producing polycrystalline silicon granules in a fluidized-bed reactor, comprising introduction of a milling gas stream (1) into a chamber (5) having polycrystalline silicon granules, as a result of which individual particles of the polycrystalline silicon granules are accelerated in such a manner that they collide with other particles of the polycrystalline silicon granules, and in this case the polycrystalline silicon granules are comminuted, **characterized in that** the milling gas stream (1) is introduced into the chamber (5) by at least one jet nozzle (4) made of tungsten carbide having a binder matrix of cobalt, optionally containing additions of metal carbides selected from the group consisting of titanium carbide, tantalum carbide, chromium carbide and vanadium carbide, where the jet nozzle is a Laval nozzle or a jet nozzle which has a diamond-like carbon coating having a thickness of 1 to 10 µm.

2. Process according to Claim 1, **characterized in that** the jet nozzle (4) consists of 84.5 to 93.4 % tungsten carbide, 15 to 6 % cobalt and 0.5 to 0.6 % metal carbides selected from the group consisting of titanium carbide, tantalum carbide, chromium carbide and vanadium carbide.

3. Process according to Claim 1, **characterized in that** the tungsten carbide has a particle size of 0.5 - 0.8 µm.

4. Process according to any one of Claims 1 to 3, **characterized in that** an exit velocity of the milling gas stream from the at least one jet nozzle (4) is greater than 300 m/s, preferably 400 to 800 m/s.

5. Process according to any one of Claims 1 to 4, **characterized in that** the polycrystalline silicon granules that are to be comminuted have a size from 300 µm to 5000 µm, the silicon seed particles produced have a size from 50 µm to 1000 µm.

6. Process according to any one of Claims 1 to 6, **characterized in that** the comminution of the polycrystalline silicon granules proceeds in a fluidized-bed reactor, where a single gas jet is generated which comminutes a part of the polycrystalline silicon granules in the fluidized bed to form silicon seed particles.

7. Process according to any one of Claims 1 to 6, **characterized in that** the comminution of the polycrystalline silicon granules proceeds in a jet mill or in a counterflow jet mill.

8. Process according to Claim 7, **characterized in that** a vertically arranged jet chamber (5) of the jet mill or of the counterflow jet mill has a circular or polygonal cross section and internally has a multipart lining (8) having silicon segments, where the at least one jet nozzle (4) is mounted on the bottom of the jet chamber (5) .

## Revendications

1. Procédé de fabrication de particules germes de silicium, qui peuvent être utilisées pour la fabrication d'un granulat de silicium polycristallin dans un réacteur à lit fluidisé, comprenant l'introduction d'un courant de gaz de broyage (1) dans une chambre (5) comprenant un granulat de silicium polycristallin, des particules individuelles du granulat de silicium polycristallin étant ainsi accélérées de telle sorte qu'elles rentrent en collision avec d'autres particules du granulat de silicium polycristallin et que le granulat de silicium polycristallin soit ainsi broyé, **caractérisé en ce que** le courant de gaz de broyage (1) est introduit dans la chambre (5) par au moins une buse à jet (4) en carbure de tungstène avec une matrice de liant en cobalt, contenant éventuellement des ajouts de carbures de métaux, choisis dans le groupe constitué par le carbure de titane, le carbure de tantale, le carbure de chrome et le carbure de vanadium, la buse à jet étant une buse de Laval ou une buse à jet qui comprend un revêtement DLC d'une épaisseur de 1 à 10 µm.

2. Procédé selon la revendication 1, **caractérisé en ce que** la buse à jet (4) est constituée par 84,5 à 93,4 % de carbure de tungstène, 15 à 6 % de cobalt et 0,5 à 0,6 % de carbures de métaux choisis dans le groupe constitué par le carbure de titane, le carbure de tantale, le carbure de chrome et le carbure de vanadium.

3. Procédé selon la revendication 1, **caractérisé en ce que** le carbure de tungstène a une taille de particule de 0,5 à 0,8 µm.

4. Procédé selon l'une quelconque des revendications 1 à 3, selon lequel une vitesse de sortie du courant de gaz de broyage de ladite au moins une buse à jet (4) est de plus de 300 m/s, de préférence de 400 à 800 m/s.

5. Procédé selon l'une quelconque des revendications 1 à 4, selon lequel le granulat de silicium polycristallin à broyer présente une taille de 300 µm à 5 000 µm, les particules germes de silicium fabriquées présentent une taille de 50 µm à 1 000 µm.

6. Procédé selon l'une quelconque des revendications 1 à 5, selon lequel le broyage du granulat de silicium polycristallin a lieu dans un réacteur à lit fluidisé, un jet de gaz individuel étant généré, qui broie une partie du granulat de silicium polycristallin dans le lit fluidisé en particules germes de silicium.

7. Procédé selon l'une quelconque des revendications 1 à 6, selon lequel le broyage du granulat de silicium polycristallin a lieu dans un broyeur à jet ou dans un broyeur à jets opposés.

8. Procédé selon la revendication 7, selon lequel une chambre à jet agencée verticalement (5) du broyeur à jet ou du broyeur à jets opposés présente une section transversale circulaire ou polygonale et, à l'intérieur, un revêtement (8) en plusieurs parties avec des segments de silicium, ladite au moins une buse à jet (4) étant disposée sur le fond de la chambre à jet (5).
